# EUROPÄISCHE PATENTSCHRIFT

(11) **EP 1 473 255 B1**
(45) Veröffentlichungstag und Bekanntmachung des Hinweises auf die Patenterteilung: **22.08.2007**
(21) Anmeldenummer: 04007499.9
(22) Anmeldetag: 27.03.2004
(51) Int. Cl.: B65G 1/04

(54) **Lagervorrichtung**
Storage apparatus
Appareil de stockage

(30) Priorität: 28.03.2003 DE 20305147 U
(43) Veröffentlichungstag der Anmeldung: 03.11.2004
(73) Patentinhaber: Megamat GmbH Büro- und Lagertechnik, 86476 Neuburg/Kammel (DE)
(72) Erfinder: Pfanner Johannes, 88690 Uhldingen (DE); Preschke Harald, 89250 Senden (DE)
(74) Vertreter: Fiener, Josef

(56) Entgegenhaltungen:
- DE-U- 8 326 738
- FR-A- 1 050 317

## Beschreibung

Die Erfindung betrifft eine Lagervorrichtung, insbesondere in Form eines mechanischen Schrankes, mit einer Vielzahl von Lagergutträgern, die jeweils einen Trägerrahmen und ein Bodenblech aufweisen.

Eine derartige Lagervorrichtung gemäß dem Oberbegriff des Anspruchs 1 ist aus der US-A-5,810,540 bekannt. Hierbei ist ein mechanischer Schrank beschrieben, bei dem eine Vielzahl von kassettenartigen Lagergutträgern in zwei seitlichen Regalrahmen ein- bzw. ausschiebbar ist. Zwischen diesen beiden rechten bzw. linken Stapelsäulen ist eine Zubringer-Plattform in Höhenrichtung verfahrbar, so dass einzelne Lagergutträger aus dem Regalrahmen entnommen werden können und zur Auslagerung einer Öffnung zugeführt werden können. Bei dem genannten Stand der Technik sind die Lagergutträger grundsätzlich kistenartig aufgebaut, so dass sich das Bodenblech bei schwerer Beladung durchbiegen kann. Zudem kann es dadurch zu Verwindungen des Trägerrahmens kommen, so dass dies bei der Einlagerung in die Regalrahmen zu Problemen führen kann. Eine zusätzliche Rahmenverstärkung verbietet sich jedoch meist, da dies zu viel kostbaren Lagerraum verbrauchen würde.

Eine weitere derartige Lagervorrichtung gemäß dem Oberbegriff des Anspruchs 1 ist aus der DE 83 26 738 U1 bekannt. Hierbei ist ein Lagerkasten für Regallager mit automatischen Beschickungs- und Entnahmevorrichtungen beschrieben, der ohne wesentliche Erhöhung seines Eigengewichtes, insbesondere im Bereich seiner Bodenpartie, eine hohe Formstabilität aufweisen soll. Dies wird dadurch erreicht, dass Längswände und Querwände miteinander und mit einer sich bodenseitig daran anschließenden, etwa Z-förmig profilierten Stufenzarge einen Rahmen bilden, in den als Boden ein Sickenblech eingesetzt ist, dessen Unterseite sich auf der Oberseite des unteren Zargenschenkels abstützt, während dessen Oberseite mit der Oberseite des oberen Zargenschenkels wenigstens annähernd bündig liegt. Dabei bildet die Unterseite des oberen Zargenschenkels mit der Außenseite des Zargensteges der Stufenzarge einen Eingriff für die Trag- und Führungsschienen des Regals.

Demzufolge liegt der Erfindung die Aufgabe zugrunde, eine Lagervorrichtung zu schaffen, deren Lagergutträger eine einfache und kompakte Bauweise bei erhöhter Stabilität bieten.

Diese Aufgabe wird gelöst durch eine Lagervorrichtung gemäß den Merkmalen des Anspruches 1.

Durch die Befestigung, insbesondere Verschweißung des Bodenblechs im Trägerrahmen unter Vorspannung wird eine gezielte Streckung des Bodenbleches erreicht, wodurch sich die Durchbiegung des Bodenbleches auch unter hohen Lasten weitgehend reduzieren lässt. Damit kann die Stabilität der Lagergutträger ohne zusätzliches Bauvolumen erheblich gesteigert werden. Da die erwünschte Vorspannung des Bodenbleches relativ einfach durch Verschweißen in erwärmtem Zustand (z.B. bei 100 °C) erreicht werden kann, wird eine einfache Bauweise ermöglicht. Der gleiche Effekt kann durch Abkühlen des Trägerrahmens oder durch mechanische Vorspannung mittels Streckung des Bodenblechs bzw. Stauchen des Trägerrahmens erzielt werden, wobei diese Maßnahmen auch in Kombination anwendbar sind. Von besonderem Vorteil ist die Anwendung solcher Lagergutträger in Lagervorrichtungen mit einer vertikal beweglichen Zubringer-Plattform, da dort meist eine Vielzahl in den Regalrahmen eingelagert wird und eine zu starke Durchbiegung den Ein-/Auslagervorgang behindern könnte. Zudem ergibt sich auch bei langer Lagerzeit von unter Umständen mehreren Jahren keine Zunahme der Durchbiegung des Bodenbleches (Kriecheffekt), da durch die Streckung des Bodenbleches, bevorzugt auch aus hochfesten Stahlblechen, eine optimale Kraftableitung auf den Trägerrahmen und die Regalrahmen der Lagervorrichtung erzielt wird.

Weitere vorteilhafte Ausgestaltungen sind Gegenstand der Unteransprüche.

Nachfolgend wird ein Ausführungsbeispiel der Lagervorrichtung anhand der Zeichnung näher erläutert und beschrieben. Hierbei zeigen:
- Fig. 1: eine Perspektivdarstellung einer Lagervorrichtung;
- Fig. 2: eine Schnittdarstellung der Lagervorrichtung gemäß Fig. 1;
- Fig. 3: eine Darstellung eines Lagergutträgers in Perspektivansicht; und
- Fig. 4: eine Seitenansicht gemäß dem Pfeil A in Fig. 3.

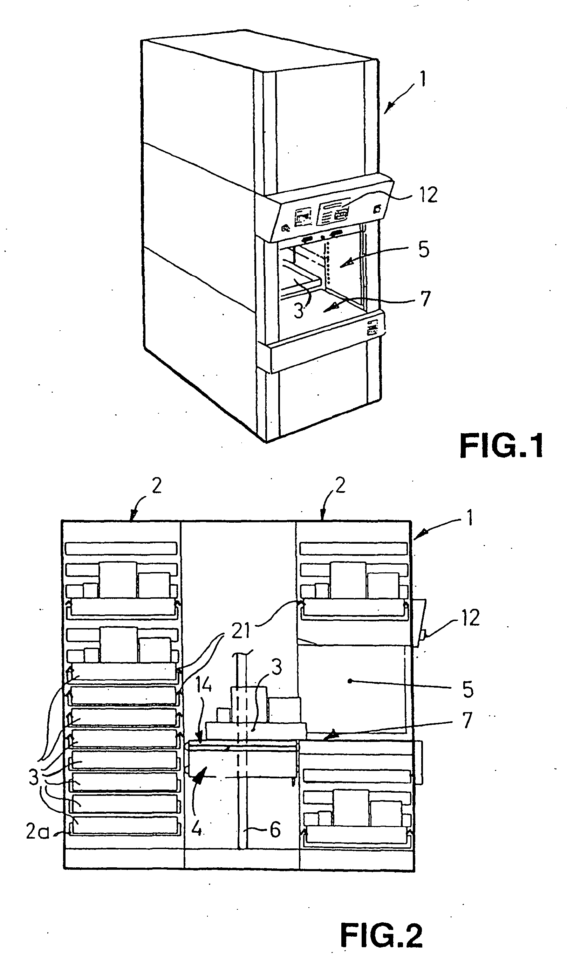

In Fig. 1 ist eine Perspektivdarstellung einer Lagervorrichtung 1 in Form eines mechanischen Schrankes gezeigt, der im wesentlichen aus zwei hintereinander angeordneten Regalrahmen 2 besteht (vgl. auch Fig. 2), in denen eine Vielzahl von relativ flachen, kassettenartigen Lagergutträgern 3 auf seitlichen Auflagewinkeln 2a einlagerbar sind. Die Lagergutträger 3 werden hierbei durch eine Zubringer-Plattform 4 von einer Ein-/Auslageröffnung 5 abgeholt und zu dem jeweiligen Fach in dem Regalrahmen 2 transportiert. Die Auslagerung erfolgt dabei in umgekehrter Weise, indem der jeweilige Lagergutträger 3 von entsprechenden Auflagewinkeln 2a an einem vorbestimmten Platz des Regalrahmens 2 gezogen wird, von der Zubringer-Plattform 4 dann auf die Ein-/Auslagerebene 7 der Ein-/Auslageröffnung 5 bewegt wird und dann in diese ausgeschoben wird. Die Steuerung der Einlagerung bzw.

Auslagerung erfolgt im allgemeinen dabei mittels einer Antriebsvorrichtung prozessorgesteuert, wobei das Steuerteil beispielsweise hinter einem hier schematisch dargestellten Bedienfeld 12 angebracht ist, mit dem bestimmte Fachplätze in dem Regalrahmen 2 angewählt werden können. In der Ein-/Auslageröffnung 5 kann dabei auch ein Höhensensor vorgesehen sein, der die Höhe des einzulagernden Lagergutträgers 3 erfasst und diesem dann ein entsprechender Platz im Regalrahmen 2 zugewiesen wird. Hierdurch wird die Lagerplatznutzung in der Lagervorrichtung 1 erhöht.

Zur Ein-/Auslagerung der jeweiligen Lagergutträger 3 sind an der Oberseite der Zubringer-Plattform 4 z. B. Kettenantriebe 14 vorgesehen, mit denen die jeweiligen Lagergutträger 3 aus der Einlageröffnung 5 übernommen werden können bzw. auf diese ausgeschoben werden können. Um hierbei mit dem jeweiligen Lagergutträger 3 in Eingriff gehen zu können, ist beispielsweise ein vorderes bzw. rückseitiges Eingriffsprofil 21 (nur an einigen Lagergutträgern 3 durch je einen Haken angedeutet) für die Kettenantriebe 14 vorgesehen, wie dies in Fig. 2 als Schnittdarstellung der Lagereinrichtung 1 gemäß Fig. 1 gezeigt ist. Hierbei sind insbesondere die Anordnung der beiden Regalrahmen 2 und die Zubringer-Plattform 4 ersichtlich, mit der nach dem Einschieben eines (mit ggf. schweren Maschinenteilen beladenen) Lagergutträgers 3 von Hand, mittels Roboter oder eines sonstigen Regalbediengerätes, die Lagergutträger 3 an den zugewiesenen Lagerplatz im Regalrahmen 2 bewegbar sind. Dies erfolgt durch Höhenbewegung der Zubringer-Plattform 4 z. B. mittels eines geschlossenen Seilstranges. Die Plattform wird dabei in Höhenrichtung an einer Führungsschiene 6 geführt.

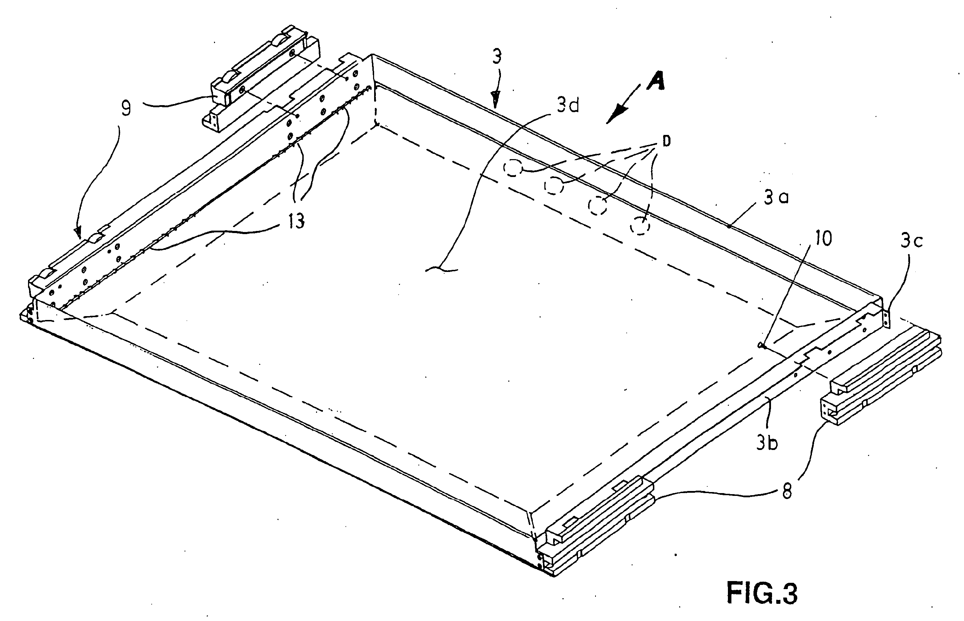

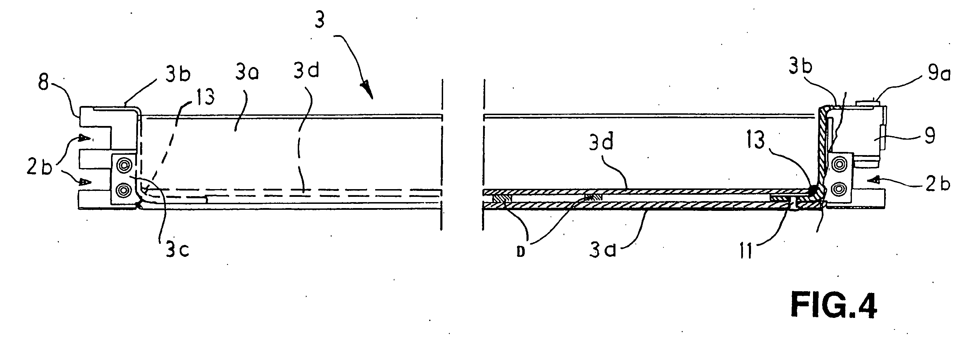

In Fig. 3 ist einer der tablarartigen Lagergutträger 3 vergrößert gezeigt. An dessen Seitenflächen, die in die Auflagewinkel 2a eingreifen oder sich darauf abstützen, sind Führungsnuten 2b (vgl. Fig. 4) vorgesehen. Zudem sind daran, wie in Fig. 3 perspektivisch dargestellt, vier Gleit- oder Rollenführungen 8 und 9 austauschbar mittels Schrauben 10 befestigt, wobei erstere jedoch auch angeschweißt oder vernietet sein können. Die hier vorderen Gleitführungen 8 sind entlang der Seitenfläche so angeordnet, dass sich diese Führungsblöcke nach oben an einer Abkantung des Seitenrahmens 3b des Lagergutträgers 3 abstützen. Entsprechendes gilt für die an der hier hinteren Seitenfläche dargestellten Rollenführungen 9. Zudem können diese jeweils an einem Winkel-Anschlag 3c anliegen, so dass sich eine exakte Positionierung zum Trägerrahmen hin ergibt, der durch die erwähnten Seitenrahmen 3b und Längsrahmen 3a gebildet ist. An diesem Trägerrahmen 3a/3b ist ein Bodenblech 3d befestigt, insbesondere verschweißt, wie dies durch die Schweißnähte 13 angedeutet ist. Dadurch ergibt sich eine besonders stabile Abstützung des Bodenbleches 3d des Lagergutträger 3 und eine optimale Krafteinleitung in den Trägerrahmen, so dass auch bei hohen Kräften, beispielsweise bei schweren Lagergütern, eine sichere Abstützung gegeben ist.

In Fig. 4 ist eine Seitenansicht gemäß dem Pfeil A in Fig. 3 dargestellt, wobei die hier rechte Hälfte des Lagergutträgers 3 entlang dem Winkel-Anschlag 3c geschnitten dargestellt ist, um die Befestigung des Bodenbleches 3d am Trägerrahmen 3a, 3b genauer zu zeigen. Bevorzugt ist das Bodenblech 3d knapp über dem unteren Schenkel des Seitenrahmens 3b mittels der Schweißnaht 13 befestigt, so dass sich eine hohe Vorspannung aufbringen lässt. Diese kann bis nahezu zur Streckgrenze des Bleches gesteigert werden, so dass das Bodenblech 3d ähnlich wie bei einer Trommel straff gespannt ist. Um hier Schwingungserscheinungen vorzubeugen, sind zwischen dem Bodenblech 3d und den untern Schenkeln der beiden Längsrahmen 3a bevorzugt Dämpfungselemente D, insbesondere Gummi- oder Kunststoffpuffer eingesetzt (vgl. auch Fig. 3). Zudem ergibt sich aus Fig. 3 und 4, dass der Seitenrahmen 3b als doppelt gekröpftes Winkelprofil ausgeführt ist, wobei der untere Schenkel über Nieten 11 mit dem unteren Schenkel des Längsrahmens 3a verbunden ist. Die Verbindung der Seiten- und Längsrahmen zum Trägerrahmen 3a, 3b kann auch durch Verschweißen erfolgen, wie dies in Fig. 3 auf Gehrung angedeutet ist. Wesentlich ist hierbei, dass das Bodenblech 3d, insbesondere mittels den Schweißnähten 13 unter Vorspannung am Trägerrahmen 3a, 3b befestigt wird. Dadurch ergibt sich die gesamte Vorstreckung des Bodenblechs 3d, so dass schwere Lasten stabiler abgestützt werden können.

Die Vorspannung kann dabei bevorzugt durch Erwärmen/Erhitzen des Bodenbleches 3d erzeugt werden, z. B. auf 100 °C, wobei das Bodenblech 3d in diesem Zustand in den Trägerrahmen 3a, 3b bevorzugt mittels den Schweißnähten 13 entlang den Seitenrahmen 3a eingeschweißt wird. Hierdurch ergibt sich die gewünschte Streckung, die die Tragfähigkeit ohne platzraubende Rahmenverstärkungen wesentlich erhöht. Alternativ oder ergänzend dazu kann die Vorspannung auch durch Abkühlen des Trägerrahmens 3a, 3b kurz vor den Verschweißen und/oder mechanisches Strecken des Bodenblechs 3d bzw. Stauchen des Trägerrahmens 3a, 3b z.B. in einer Pressvorrichtung erzielt werden.

## Patentansprüche

1. Lagervorrichtung, insbesondere in Form eines mechanischen Schrankes (1), mit einer Vielzahl von Lagergutträgern (3), die jeweils einen Trägerrahmen (3a, 3b) und ein Bodenblech (3d) aufweisen,
**dadurch gekennzeichnet, dass**
das Bodenblech (3d) jedes Lagergutträgers (3) unter Vorspannung an dem Trägerrahmen (3a, 3b) befestigt ist, wobei die Vorspannung durch Erwärmen des Bodenblechs (3d) und/oder Abkühlen des Trägerrahmens (3a, 3b) und/oder Streckung des Bodenbleches (3d) und/oder Stauchen des Trägerrahmens (3a, 3b) vor der Befestigung des Lagergutträgers (3) an dem Trägerrahmen (3a, 3b) erzeugbar ist.

2. Lagervorrichtung nach Anspruch 1, **dadurch gekennzeichnet, dass** das Bodenblech (3d) mittels Schweißnähten (13) am Trägerrahmen (3a, 3b) verschweißt ist.

3. Lagervorrichtung nach Anspruch 2, **dadurch gekennzeichnet, dass** die Schweißnähte (13) entlang der Seitenrahmen (3b) des Trägerrahmens (3a, 3b) verlaufen.

4. Lagervorrichtung nach einem der Ansprüche 1 bis 3, **dadurch gekennzeichnet, dass** am Trägerrahmen (3a, 3b) jeweils zwei Gleit- oder Rollenführungen (8, 9) seitlich am Lagergutträger (3) angeordnet sind.

5. Lagervorrichtung nach einem der Ansprüche 1 bis 4, **dadurch gekennzeichnet, dass** die Seitenrahmen (3b) als doppelt abgekröpftes Winkelprofil ausgebildet sind, wobei das Bodenblech (3d) im unteren Bereich des Trägerrahmens (3a, 3b) des Lagergutträgers (3) angeordnet ist.

6. Lagervorrichtung nach einem der Ansprüche 1 bis 5, **dadurch gekennzeichnet, dass** die Seiten- und Längsrahmen (3a, 3b) des Lagergutträgers (3) mittels Nieten (11) verbunden oder im Eckbereich auf Gehrung verschweißt sind.

7. Lagervorrichtung nach einem der Ansprüche 1 bis 5, **dadurch gekennzeichnet, dass** zwischen den unteren Schenkeln der Längsrahmen (3b) und dem Bodenblech (3d) des Lagergutträgers (3) Dämpfungselemente (D) eingesetzt sind.

## Claims

1. Storage apparatus, in particular in form of a mechanical cabinet (1) with a multiplicity of storage carriers (3), which include a carrier framework (3a, 3b) and a floor sheet (3d) each, **characterized in that**
the floor sheet (3d) of each storage carrier (3) is fastened under pre-loading to the carrier framework (3a, 3b), wherein the pre-loading is generated by heating the floor sheet (3d) and/or by cooling of the carrier framework (3a, 3b) and/or stretching of the floor sheet (3d) and/or tossing the carrier framework (3a, 3b) before the storage carrier (3) is fixed to the carrier framework (3a, 3b).

2. Storage apparatus according to claim 1, **characterized in that** the floor sheet (3d) is welded by means of welding seams (13) at the carrier framework (3a, 3b).

3. Storage apparatus according to claim 2, **characterized in that** the welding seams (13) run along the side frames (3b) of the carrier framework (3a, 3b).

4. Storage apparatus according to one of claims 1 to 3, **characterized in that** two sliding or roller aprons (8, 9) are arranged at the carrier framework (3a, 3b), each laterally at the storage carrier (3).

5. Storage apparatus according to one of claims 1 to 4, **characterized in that** the side frames (3b) are designed as double-bent profile, wherein the floor sheet (3d) is arranged in the lower range of the carrier framework (3a, 3b) of the storage carrier (3).

6. Storage apparatus according to one of claims 1 to 5, **characterized in that** the side and longitudinal framework (3a, 3b) of the storage carrier (3) are connected by means of rivets (11) or welded in the corner area on mitre.

7. Storage apparatus according to one of claims 1 to 5, **characterized in that** damping elements (D) are provided between the lower thighs of the longitudinal frameworks (3b) and the floor sheet (3d) of the storage carrier (3).

## Revendications

1. Dispositif de stockage, en particulier sous la forme d'une armoire mécanique (1) avec une pluralité de supports de marchandises stockées (3), qui présentent respectivement un cadre de support (3a, 3b) et une tôle de fond (3d),
**caractérisé en ce que**
la tôle de fond (3d) de chaque support de marchandises stockées (3) est fixée au cadre de support (3a, 3b) sous précontrainte, ladite précontrainte pouvant être générée via échauffement de la tôle de fond (3d) et/ou refroidissement du cadre de support (3a, 3b) et/ou allongement de la tôle de fond (3d) et/ou compression du cadre de support (3a, 3b) avant la fixation du support de marchandises stockées (3) au cadre de support (3a, 3b).

2. Dispositif de stockage selon la revendication 1, **caractérisé en ce que** la tôle de fond (3d) est soudée sur le cadre de support (3a, 3b) au moyen de soudures (13).

3. Dispositif de stockage selon la revendication 2, **caractérisé en ce que** les soudures (13) évoluent le long des cadres latéraux (3b) du cadre de support (3a, 3b).

4. Dispositif de stockage selon l'une quelconque des revendications 1 à 3, **caractérisé en ce que** deux guidages à glissière ou à rouleaux (8, 9) sont respectivement agencés sur le cadre de support (3a, 3b) latéralement au support de marchandises stockées (3).

5. Dispositif de stockage selon l'une quelconque des revendications 1 à 4, **caractérisé en ce que** les cadres latéraux (3b) sont conçus sous forme de profilé angulaire à double coude, la tôle de fond (3d) étant agencée dans la zone inférieure du cadre de support (3a, 3b) du support de marchandises stockées (3).

6. Dispositif de stockage selon l'une quelconque des revendications 1 à 5, **caractérisé en ce que** les cadres latéraux et longitudinaux (3a, 3b) du support de marchandises stockées (3) sont assemblés au moyen de rivets (11) ou soudés en onglet au niveau de l'angle.

7. Dispositif de stockage selon l'une quelconque des revendications 1 à 5, **caractérisé en ce que** des éléments d'amortissement (D) sont insérés entre les côtés inférieurs des cadres longitudinaux (3b) et la tôle de fond (3d) du support de marchandises stockées (3)'.
